# EUROPÄISCHE PATENTSCHRIFT

(11) **EP 3 210 803 B1**
(45) Veröffentlichungstag und Bekanntmachung des Hinweises auf die Patenterteilung: **12.02.2020**
(21) Anmeldenummer: 16157874.5
(22) Anmeldetag: 29.02.2016
(51) Int. Cl.: B60D 5/00, B61D 17/22, B62D 47/02

(54) **ÜBERGANG ZWISCHEN ZWEI GELENKIG MITEINANDER VERBUNDENEN FAHRZEUGTEILEN**
CONNECTION BETWEEN TWO VEHICLE SECTIONS WITH JOINTED COUPLINGS
PASSAGE ENTRE DEUX PARTIES DE VÉHICULE RELIÉES DE MANIÈRE ARTICULÉE

(43) Veröffentlichungstag der Anmeldung: 30.08.2017
(73) Patentinhaber: Hübner GmbH & Co. KG, 34123 Kassel (DE)
(72) Erfinder: KARASEK, Jens, 34260 Kaufungen (DE)
(74) Vertreter: Patentanwälte Walther Hinz Bayer PartGmbB

(56) Entgegenhaltungen:
- EP-B1- 2 233 327
- WO-A1-91/02672
- DE-A1-102010 011 903

## Beschreibung

Die Erfindung betrifft einen Übergang zwischen zwei gelenkig miteinander verbundenen Fahrzeugteilen, wobei im Dachbereich der Fahrzeugteile eine Führungseinrichtung für im Dachbereich verlaufende Versorgungsleitungen vorgesehen ist, wobei die Führungseinrichtung eine Federeinrichtung zur Führung der Versorgungsleitungen umfasst, wobei an der Federeinrichtung Leitungsträger angeordnet sind.

Ein Übergang zwischen zwei gelenkig miteinander verbundenen Fahrzeugteilen eines Fahrzeugs ist bekannt; hierbei besteht der Übergang üblicherweise aus einer Übergangsbrücke, die von einem Falten- oder Wellenbalg überspannt wird. Die beiden Fahrzeugteile sind darüber hinaus durch ein Gelenk oder eine gelenkige Verbindung miteinander verbunden, wobei sich Teile des Übergangs auf dem Gelenk abstützen.

Aus der WO91/02672 ist eine Vorrichtung zur Stabilisierung des Mittelrahmens eines Balges eines Übergangs zwischen den Fahrzeugteilen eines Gelenkfahrzeugs bekannt; die Vorrichtung umfasst jeweils zwei seitlich zur Mittellängsachse des Gelenkfahrzeugs angeordnete, gekrümmte Blattfedern, die jeweils mit ihrem einen Ende am Mittelrahmen des Balges durch jeweils eine vertikale Drehachse und mit ihrem anderen Ende ebenfalls durch eine vertikale Drehachse am jeweiligen Fahrzeugteil angelenkt sind.

Aus der DE-B-120 72 20 ist ein Mittelrahmen eines Balges zwischen zwei gelenkig miteinander verbundenen Fahrzeugteilen bekannt, wobei der Mittelrahmen die beiden Hälften eines Balges eines Überganges unterteilt. Das heißt, dass die beiden Balghälften einerseits am Mittelrahmen befestigt sind, und andererseits an den Stirnseiten der beiden gelenkig miteinander verbundenen Fahrzeugteile.

Darüber hinaus ist bekannt, Versorgungsleitungen, wie z. B. Kabelschläuche, Leitungen für die Heizung, für die Druckluftversorgung sowie auch Elektroleitungen und gegebenenfalls auch Leitungen für Klimaanlagen, im Dachbereich eines derartigen Gelenkfahrzeugs zu führen. Die Führung von Versorgungsleitungen im Dachbereich ist grundsätzlich aus der EP 0 897 337 B1 bekannt. Hierbei ist insbesondere auch bekannt, im Mittelrahmen des Balges eine Führungstraverse vorzusehen, wobei in der Führungstraverse ein Schlitten geführt ist, der durch eine Kabelhalterung die zwischen den beiden Fahrzeugteilen die im Deckenbereich verlaufenden Versorgungsleitungen aufnimmt. Die Versorgungsleitungen sind im Bereich der fahrzeugseitigen Enden durch Schottbleche in die Wagenkästen der Fahrzeugteile eingeführt. Der Verlauf der Versorgungsleitungen im Dachbereich kann die unterschiedlichsten Formen aufweisen, so z. B. eine S-Form, vorzugsweise ist die Form der Kabelführung allerdings im Wesentlichen U- oder V-förmig, mit an den Enden abgewinkelten Flanken, mit denen die Versorgungsleitungen über die bereits beschriebenen Schottbleche in die Wagenkästen der Fahrzeugteile eingeführt werden.

Aus der EP 2 233 327 B1 ist zur Optimierung der Führung der Versorgungsleitungen eine Blattfeder vorgesehen, deren Form in der Draufsicht der Form der gewünschten Kabelführung entspricht, also beispielsweise in der Draufsicht U- oder V-förmig gehalten ist bzw. auch kreisbogenförmig gehalten sein kann. Eine solche Blattfeder weist, über die Länge der Blattfeder verteilt, sogenannte Leitungsträger auf, die sich zu beiden Seiten der Blattfeder erstrecken und die schlussendlich der Aufnahme der Versorgungsleitungen dienen. Es wird deutlich, dass die Versorgungsleitungen aufgrund der an der Blattfeder angeordneten Leitungsträger der Form der Blattfeder folgen.

Die Blattfeder selbst ist endseitig durch sogenannte Anschlussträger mit den Stirnseiten der Wagenkästen der Fahrzeugteile verbunden. Es wurde bereits darauf hingewiesen, dass der Balg des Übergangs mit einem Mittelrahmen versehen sein kann, wobei der Mittelrahmen eine Führungstraverse aufweist, die der Aufnahme eines Schlittens dient, der entlang der Führungstraverse verfahrbar ist. Der Schlitten selbst ist durch einen Leitungsträger mit der Blattfeder verbunden. Der bzw. die Leitungsträger selbst sitzen auf der Blattfeder auf, das heißt, dass durch die Leitungsträger die Blattfeder klemmend erfasst wird.

Des Weiteren ist bekannt, dass ein Fahrzeug mit mehreren Fahrzeugteilen, die gelenkig, insbesondere durch ein Fahrzeuggelenk, miteinander verbunden sind, die unterschiedlichsten Fahrbewegungen erfährt, als da sind Knick-, Wank-, Nick- oder auch Versatzbewegungen. Hierbei findet naturgemäß eine Verformung der Blattfeder statt. Das heißt, dass die Blattfeder gelängt oder auch gestaucht wird, je nachdem welchen Bewegungsverlauf die beiden Fahrzeugteile gerade relativ zueinander ausführen. Der Schlitten, durch den die Blattfeder in der Führungstraverse geführt ist, verfährt hierbei entlang der Führungstraverse. Es wurde bereits darauf hingewiesen, dass im Bereich der Führungstraverse, das heißt, dem Zenit der Blattfeder ein Leitungsträger vorgesehen ist, der unmittelbar über dem Schlitten an der Blattfeder angeordnet ist. In diesem Bereich, das heißt im Bereich des Zenites oder dem Scheitel der Blattfeder, findet die im Wesentlichen stärkste Verformung der Blattfeder statt. In diesem Bereich ist allerdings durch den Leitungsträger über die Breite des Leitungsträgers die Blattfeder versteift. Das bedeutet, dass die Blattfeder zu beiden Seiten des Leitungsträgers einer erheblichen Belastung ausgesetzt ist. Die Folge hiervon ist, dass die Blattfeder in diesem Bereich brechen kann.

Die der Erfindung zugrunde liegende Aufgabe liegt demzufolge darin, die Lebensdauer einer Blattfeder zur Führung der Versorgungsleitungen zu erhöhen.

Zur Lösung der Aufgabe wird erfindungsgemäß vorgeschlagen, dass die Federeinrichtung mindestens zwei Blattfedersegmente umfasst, die jeweils mit ihrem einen Ende an der Stirnseite des entsprechenden Fahrzeugteils befestigt sind, wobei die Blattfedersegmente mit ihren anderen freien Enden durch mindestens eine Scharniergelenkvorrichtung mit im Einbauzustand vertikaler Schwenkachse verbunden sind, wobei die Blattfedersegmente im Wesentlichen gleichlang sind, was zur Folge hat, dass sich die Scharniergelenkvorrichtung im Zenit der Federeinrichtung befindet. Hieraus wird deutlich, dass durch eine solche Scharniergelenkvorrichtung mit vertikaler Schwenkachse im Bereich der Anordnung des Leitungsträgers im Zenit oder Scheitel der Federeinrichtung, die Belastung auf die Federerheblich reduziert werden kann, nämlich insofern, als ein Teil der Verformung der Federeinrichtung durch die Scharniergelenkvorrichtung aufgenommen werden kann.
Oder anders ausgedrückt: an der Stelle, nämlich im Zenit der Blattfeder, wo nach dem Stand der Technik durch den Leitungsträger die Blattfeder versteift war, ist nach der Erfindung eine Scharniergelenkvorrichtung vorgesehen, die zwei Blattfedersegmente verbindet, wobei die Scharniergelenkvorrichtung den Leitungsträger aufnimmt. Durch die Scharniergelenkvorrichtung mit vertikaler Schwenkachse erhält die Federeinrichtung mehr Bewegungsfreiheit, was eine Beschädigung der Blattfeder in diesem Bereich verhindert.

Vorteilhafte Merkmale und Ausgestaltungen der Erfindung ergeben sich aus den Unteransprüchen.

So ist insbesondere vorgesehen, dass die Blattfedersegmente einen bogenförmigen Verlauf aufweisen, und zwar insbesondere einen nach außen gewölbten bogenförmigen Verlauf. Unter einem nach außen gewölbten bogenförmigen Verlauf wird ein solcher verstanden, bei dem die Blattfedersegmente in Richtung voneinander weg gewölbt sind.

In Bezug auf die Scharniergelenkvorrichtung ist insbesondere des Weiteren vorgesehen, dass die Scharniergelenkvorrichtung mindestens ein Scharniergelenk umfasst, vorzugsweise allerdings zwei beabstandet zueinander angeordnete Scharniergelenke. Hierbei sind nach einem weiteren Merkmal der Erfindung vorzugsweise die beiden Scharniergelenke durch ein Verbindungsglied insbesondere starr miteinander verbunden. Auf dem Verbindungsglied sitzt nach einem weiteren vorteilhaften Merkmal der Erfindung der Leitungsträger auf. Das heißt, dass das Verbindungsglied eine Länge aufweist, die in etwa der Breite des Leitungsträgers entspricht. Hieraus wird unmittelbar deutlich, dass die beiden Blattfedersegmente, die durch die beiden beabstandet zueinander angeordneten Scharniergelenke miteinander verbunden sind, bedingt durch die vertikale Gelenkachse der Scharniergelenke, in horizontaler Ebene verschwenken können. Hierdurch wird ein erheblicher Teil der Verformungsenergie der Federeinrichtung durch die Bewegung in den beiden Scharniergelenken aufgenommen.

Nach einem weiteren Merkmal der Erfindung ist vorgesehen, dass die Blattfedersegmente mindestens ein Vorspannglied aufweisen, um die Blattfedersegmente in einer bogenförmig nach außen gewölbten Position zu halten. Nach einem Merkmal der Erfindung kann in diesem Zusammenhang vorgesehen sein, im Bereich der Anschlussträger, mit welchen die Blattfedersegmente an den Stirnseiten der Wagenkästen der Fahrzeugteile befestigt sind, ebenfalls ein Scharniergelenk mit vertikaler Schwenkachse vorzusehen. Hieraus wird deutlich, dass jedes Blattfedersegment zu beiden Enden ein Scharniergelenk mit vertikaler Schwenkachse aufweist. In Extremsituationen, auch bedingt durch das Scharniergelenk im Bereich des Anschlussträgers, kann es vorkommen, dass das Blattfedersegment nicht mehr wie gewünscht nach außen gewölbt ist, sondern dass vielmehr das Blattfedersegment nach innen umspringt. Das heißt, dass die beiden Blattfedersegmente dann aufeinander zu gewölbt sind. Hierbei erfahren dann die Versorgungsleitungen eine erhebliche Belastung, was gleichfalls die Blattfedersegmente unter erhebliche Spannung setzt. Um dies zu verhindern, ist, wie bereits ausgeführt, mindestens ein Vorspannglied vorgesehen, das dafür sorgt, dass die Blattfedersegmente immer eine nach außen gewölbte Position einnehmen.

Im Einzelnen ist in diesem Zusammenhang vorgesehen, dass das Vorspannglied als Blattfederbrücke ausgebildet ist, die den Bereich der Scharniergelenkvorrichtung, insbesondere auf der Innenseite der Federeinrichtung, überbrückt. Durch eine derartige Blattfederbrücke auf der Innenseite der Scharniergelenkvorrichtung werden die beiden durch die Scharniergelenkvorrichtung verbundenen Blattfedersegmente, unabhängig von dem Bewegungsverlauf, dem die Federeinrichtung aufgrund der entsprechenden Fahrbewegungen der Fahrzeugteile relativ zueinander unterworfen wird, immer in nach außen gewölbter Position gehalten. Alternativ kann zu der vorgenannten Blattfederbrücke als Vorspannglied auch vorgesehen sein, auf der nach außen weisenden Seite der Blattfedersegmente ein Spannseil vorzusehen. Auch hierdurch kann die Federeinrichtung mit den beiden Blattfedersegmenten in der entsprechend gewünschten nach außen gewölbten Position gehalten werden.

Nach einem weiteren Merkmal der Erfindung ist vorgesehen, dass die Führungseinrichtung eine im Dachbereich quer zur Fahrzeuglängsachse verlaufende Führungstraverse umfasst, wobei die Führungstraverse einen längs der Führungstraverse verlaufenden Schlitten aufnimmt, wobei der Schlitten mit der Blattfedereinrichtung im Bereich der Scharniergelenkvorrichtung in Verbindung steht. Die Führungstraverse ist hierbei insbesondere Teil eines Mittelrahmens des Balges, sodass die Federeinrichtung durch den Schlitten mittig in der Führungstraverse geführt ist.

Anhand der Zeichnungen wird die Erfindung nachstehend beispielhaft näher erläutert.
- Fig. 1: zeigt schematisch eine Ansicht von oben auf einen Übergang zwischen zwei Fahrzeugteilen eines Gelenkfahrzeuges;
- Fig. 2: zeigt schematisch und perspektivisch einen Übergang gemäß Fig. 1, wobei der Verlauf der Federeinrichtung zwischen den beiden Fahrzeugteilen und dem Mittelrahmen erkennbar ist;
- Fig. 3: zeigt die Einzelheit X aus Fig. 1, wobei jedoch der Leitungsträger und der Schlitten zur Führung der Federeinrichtung in der Führungstraverse des Mittelrahmens weggelassen sind;
- Fig. 4: zeigt eine Ansicht gemäß Fig. 3, wobei jedoch der Leitungsträger, der Schlitten sowie die Führungstraverse erkennbar sind;
- Fig. 5: zeigt einen Schnitt gemäß der Linie V-V aus Fig. 4.

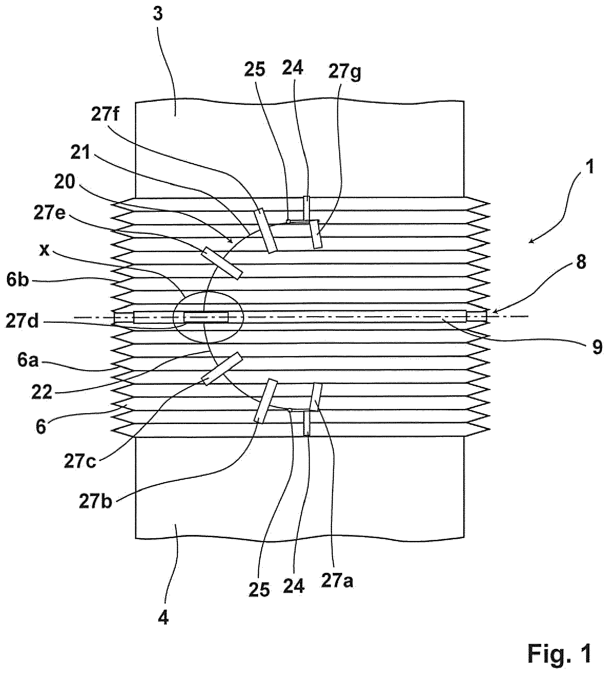

Gemäß der Fig. 1 sind die beiden Fahrzeugteile, zwischen denen der insgesamt mit 1 bezeichnete Übergang angeordnet ist, mit 3 und 4 bezeichnet. Der insgesamt mit 1 bezeichnete Übergang umfasst den Balg 6, wobei der Balg 6 an den Stirnseiten der beiden Fahrzeugteile 3, 4 angeordnet ist. Der Balg 6 ist darüber hinaus durch den Mittelrahmen 8 in zwei Balghälften 6a, 6b unterteilt. Der Mittelrahmen 8 weist die Führungstraverse 9 auf.

Schematisch erkennbar ist die insgesamt mit 20 bezeichnete Federeinrichtung. Die Federeinrichtung 20 mit den beiden Blattfedersegmenten 21, 22 ist durch jeweilige Anschlussträger 24 mit den Stirnseiten der beiden Fahrzeugteile 3, 4 verbunden. Im Bereich der Anschlussträger 24 ist jeweils ein Scharniergelenk 25 vorgesehen, das eine gelenkige Verbindung zwischen dem Anschlussträger 24 einerseits und dem Blattfedersegment 21, 22 andererseits bereitstellt.

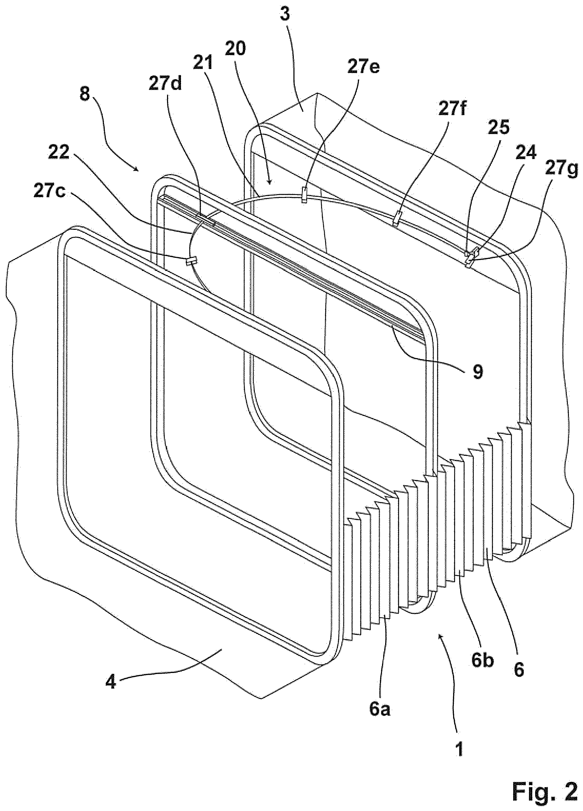

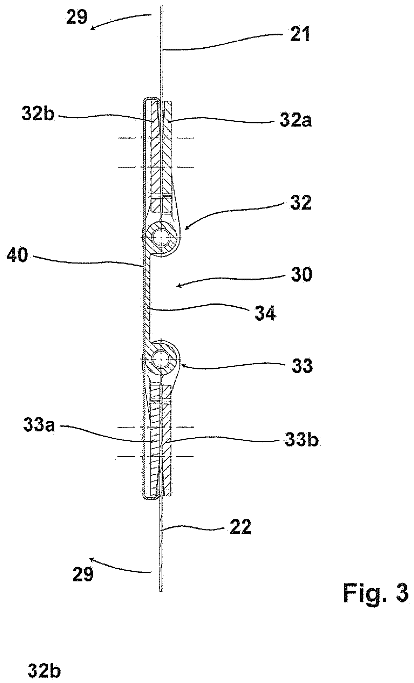

Die Blattfedereinrichtung 20 weist darüber hinaus mehrere Leitungsträger 27a - 27g auf, wobei die Leitungsträger 27a - 27c und 27e - 27 g das jeweilige Blattfedersegment 21, 22 klemmend erfassen. Die Anordnung des Leitungsträger 27d ergibt sich in Anschauung der Figuren 3 bis 5. Der Leitungsträger 27d befindet sich im Zenit bzw. im Scheitel der insgesamt mit 20 bezeichneten Federeinrichtung, also dort, wo die größte Verformung stattfindet. Der Leitungsträger 27d ist darüber hinaus mit einem Schlitten 10 verbunden, wobei der Schlitten 10 in der Führungstraverse 9 des Mittelrahmens 8 längs verschieblich geführt ist. In diesem Zusammenhang wird auf die Fig. 2 verwiesen, wobei der Mittelrahmen 8 die Führungstraverse 9 aufweist. Im Einzelnen ist unter dem Leitungsträger 27d der Schlitten 10 angeordnet, der mit dem Leitungsträger 27d verbunden ist, und der in der Führungstraverse 9 längsverschieblich geführt ist.

Aus Fig. 3 ergibt sich die Scharniergelenkvorrichtung 30 als Einzelheit X aus Fig. 1. Die Scharniergelenkvorrichtung 30 umfasst die beiden Scharniergelenke 32 und 33, die durch ein starres oder steifes Verbindungsglied 34 in Form einer Gelenklasche miteinander in Verbindung stehen. Darüber hinaus weist jedes Scharniergelenk 32, 33 eine Scharnierbacke 32a, 33a auf, sowie jeweils eine entsprechende Konterbacke 32b, 33b, durch die das entsprechende Blattfedersegment 21, 22 eingeklemmt gehalten ist. Allerdings wird nicht nur das Blattfedersegment 21, 22 durch das jeweilige Scharniergelenk 32, 33 klemmend erfasst, sondern darüber hinaus auch die Blattfederbrücke 40, wie dies ebenfalls in Anschauung von Fig. 3 erkennbar ist. Die Blattfederbrücke 40 befindet sich auf der Innenseite der bogenförmig gewölbt ausgebildeten Federeinrichtung 20, das heißt, die beiden Blattfedersegmente 21, 22 erfahren eine Kraft in Richtung der Pfeile 29. Hierdurch wird erreicht, wie dies bereits an anderer Stelle erläutert worden ist, dass die Federeinrichtung 20 mit den beiden Blattfedersegmenten 21, 22 die in Fig. 1 dargestellte Form im Wesentlichen beibehält, das heißt, dass die Blattfedersegmente nach außen gewölbt sind, egal welche Art der Verformung aufgrund der Fahrbewegungen der Fahrzeugteile relativ zueinander die Federeinrichtung 20 insgesamt erfährt.

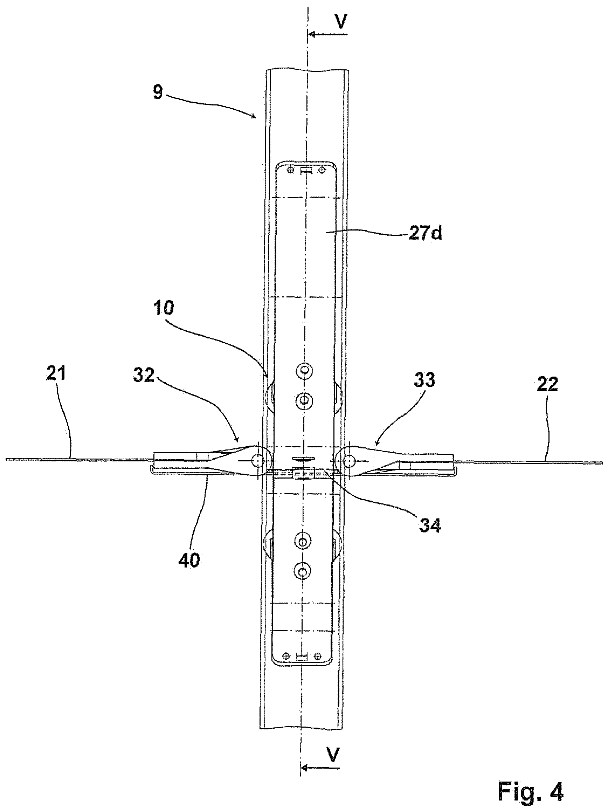

Die Darstellung gemäß Fig. 4 unterscheidet sich von der gemäß Fig. 3 dadurch, dass hier sowohl die Führungstraverse 9 als auch der Schlitten 10 sowie der Leitungsträger 27d dargestellt sind. Die Führungstraverse 9 ist als C-förmige Schiene ausgebildet, die den Schlitten 10, der als Rollenschlitten ausgebildet ist, längsverschieblich aufnimmt. Der Schlitten 10 ist durch Schrauben mit dem Leitungsträger 27 verbunden.

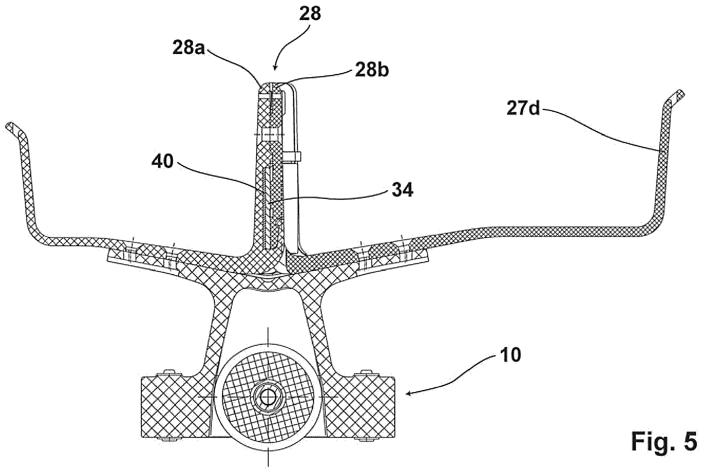

Fig. 5 zeigt einen Schnitt gemäß der Linie V-V aus Fig. 4. Bei der Darstellung gemäß Fig. 5 ist der besseren Übersichtlichkeit wegen die Führungstraverse 9 weggelassen. Der Leitungsträger 27d weist einen Dom 28 auf, der sich aus zwei Hälften 28a, 28b zusammensetzt, wobei zwischen den beiden Domhälften 28a, 28b einerseits die Blattfederbrücke 40 und andererseits das Verbindungsglied 34 klemmend aufgenommen sind.

Die übrigen Leitungsträger sind unmittelbar mit dem jeweiligen Blattfedersegment 21, 22 verbunden, wobei hierzu die einzelnen Leitungsträger ebenfalls einen Dom 28 mit zwei Hälften 28a, 28b aufweisen, zwischen denen das Blattfedersegment 21, 22 klemmend erfasst ist.

### Bezugszeichenliste:

- 1: Übergang
- 3: Fahrzeugteil
- 4: Fahrzeugteil
- 6: Balg
- 6a: Balghälfte
- 6b: Balghälfte
- 8: Mittelrahmen
- 9: Führungstraverse
- 10: Schlitten
- 20: Federeinrichtung
- 21: Blattfedersegment
- 22: Blattfedersegment
- 24: Anschlussträger
- 25: Scharniergelenk
- 27a: Leitungsträger
- 27b: Leitungsträger
- 27c: Leitungsträger
- 27d: Leitungsträger
- 27e: Leitungsträger
- 27f: Leitungsträger
- 27g: Leitungsträger
- 28: Dom
- 28a: Hälfte
- 28b: Hälfte
- 29: Pfeile
- 30: Scharniergelenkvorrichtung
- 32: Scharniergelenk
- 32a: Scharnierbacke
- 32b: Konterbacke
- 33: Scharniergelenk
- 33a: Scharnierbacke
- 33b: Konterbacke
- 34: Verbindungsglied
- 40: Blattfederbrücke

## Patentansprüche

1. Übergang (1) zwischen zwei gelenkig miteinander verbundenen Fahrzeugteilen (3, 4), wobei im Dachbereich der Fahrzeugteile (3, 4) eine Führungseinrichtung für im Dachbereich verlaufende Versorgungsleitungen vorgesehen ist, wobei die Führungseinrichtung eine Federeinrichtung (20) zur Führung der Versorgungsleitungen umfasst, wobei an der Federeinrichtung (20) Leitungsträger (27a - 27g) angeordnet sind,
**dadurch gekennzeichnet,**
**dass** die Federeinrichtung (20) mindestens zwei Blattfedersegmente (21, 22) umfasst, die jeweils mit ihrem einen Ende an der Stirnseite des entsprechenden Fahrzeugteils (3, 4) befestigt sind, wobei die Blattfedersegmente (21, 22) mit ihren anderen freien Enden durch mindestens eine Scharniergelenkvorrichtung (30) mit vertikaler Schwenkachse miteinander verbunden sind, wobei die Blattfedersegmente (21, 22) im Wesentlichen gleich lang sind, was zur Folge hat, dass sich die Scharniergelenkvorrichtung (30) im Zenit der Federeinrichtung (20) befindet.

2. Übergang (1) zwischen zwei gelenkig miteinander verbundenen Fahrzeugteilen (3, 4) nach Anspruch 1,
**dadurch gekennzeichnet,**
**dass** die Blattfedersegmente (21, 22) einen bogenförmigen Verlauf aufweisen.

3. Übergang (1) zwischen zwei gelenkig miteinander verbundenen Fahrzeugteilen (3, 4) nach Anspruch 2,
**dadurch gekennzeichnet,**
**dass** die Blattfedersegmente (21, 22) bogenförmig nach außen gewölbt sind.

4. Übergang (1) zwischen zwei gelenkig miteinander verbundenen Fahrzeugteilen (3, 4) nach einem der voranstehenden Ansprüche,
**dadurch gekennzeichnet,**
**dass** die Blattfedersegmente (21, 22) im Wesentlichen gleich lang sind.

5. Übergang (1) zwischen zwei gelenkig miteinander verbundenen Fahrzeugteilen (3, 4) nach einem der voranstehenden Ansprüche,
**dadurch gekennzeichnet,**
**dass** die Scharniergelenkvorrichtung (30) mindestens ein Scharniergelenk (32, 33) umfasst.

6. Übergang (1) zwischen zwei gelenkig miteinander verbundenen Fahrzeugteilen (3, 4) nach einem der voranstehenden Ansprüche,
**dadurch gekennzeichnet,**
**dass** die Scharniergelenkvorrichtung (30) einen Leitungsträger (27a - 27g) aufnimmt.

7. Übergang (1) zwischen zwei gelenkig miteinander verbundenen Fahrzeugteilen (3, 4) nach einem der voranstehenden Ansprüche,
**dadurch gekennzeichnet,**
**dass** die Scharniergelenkvorrichtung (30) mindestens zwei beabstandet zueinander angeordnete Scharniergelenke (32, 33) umfasst.

8. Übergang (1) zwischen zwei gelenkig miteinander verbundenen Fahrzeugteilen (3, 4) nach Anspruch 7,
**dadurch gekennzeichnet,**
**dass** die Scharniergelenke (32, 33) durch ein Verbindungsglied (34) miteinander verbunden sind.

9. Übergang (1) zwischen zwei gelenkig miteinander verbundenen Fahrzeugteilen (3, 4) nach Anspruch 8,
**dadurch gekennzeichnet,**
**dass** der Leitungsträger im Zenit der Federeinrichtung (20) mit dem Verbindungsglied (34) verbunden ist.

10. Übergang (1) zwischen zwei gelenkig miteinander verbundenen Fahrzeugteilen (3, 4) nach einem der voranstehenden Ansprüche,
**dadurch gekennzeichnet,**
**dass** die Blattfedersegmente (21, 22) mindestens ein Vorspannglied aufweisen, um die Blattfedersegmente (21, 22) in einer bogenförmigen nach außen gewölbten Position zu halten.

11. Übergang (1) zwischen zwei gelenkig miteinander verbundenen Fahrzeugteilen (3, 4) nach Anspruch 10,
**dadurch gekennzeichnet,**
**dass** das Vorspannglied als Blattfederbrücke (40) ausgebildet ist, die den Bereich der Scharniergelenkvorrichtung (30) überbrückt.

12. Übergang (1) zwischen zwei gelenkig miteinander verbundenen Fahrzeugteilen (3, 4) nach Anspruch 11,
**dadurch gekennzeichnet,**
**dass** die Blattfederbrücke (40) auf der Innenseite der Scharniergelenkvorrichtung (30) angeordnet ist.

13. Übergang (1) zwischen zwei gelenkig miteinander verbundenen Fahrzeugteilen (3, 4) nach einem der voranstehenden Ansprüche,
**dadurch gekennzeichnet,**
**dass** die Führungseinrichtung eine im Dachbereich quer zur Führungslängsachse verlaufende Führungstraverse (9) umfasst, wobei die Führungstraverse (9) einen längs der Führungstraverse (9) verlaufenden Schlitten (10) aufnimmt, wobei der Schlitten (10) mit der Federeinrichtung (20) im Bereich der Scharniergelenkvorrichtung (30) in Verbindung steht.

14. Übergang (1) zwischen zwei gelenkig miteinander verbundenen Fahrzeugteilen (3, 4) nach Anspruch 13,
**dadurch gekennzeichnet,**
**dass** der Übergang einen Balg (6) mit einem Mittelrahmen (8) umfasst, wobei die Führungstraverse (9) Teil des Mittelrahmens (8) ist.

## Claims

1. A gangway (1) between two articulately connected vehicle parts (3, 4), wherein a guide assembly for supply lines extending in the roof area is provided in the roof area of the vehicle parts (3, 4), wherein the guide assembly comprises a spring assembly (20) for guiding the supply lines, wherein line supports (27a-27g) are arranged on the spring assembly (20),
**characterized in that**
the spring assembly (20) comprises at least two leaf spring segments (21, 22), which are respectively fastened with their one end to the front side of the corresponding vehicle part (3, 4), wherein the leaf spring segments (21, 22) are connected to each other with their other free ends through at least one hinge joint device (30) with a vertical pivot axis, wherein the leaf spring segments (21, 22) have substantially the same length, with the consequence that the hinge joint device (30) is located at the zenith of the spring assembly (20).

2. The gangway (1) between two articulately connected vehicle parts (3, 4) according to claim 1,
**characterized in that**
the leaf spring segments (21, 22) have an arcuate course.

3. The gangway (1) between two articulately connected vehicle parts (3, 4) according to claim 2,
**characterized in that**
the leaf spring segments (21, 22) are bulge outwardly in an arcuate shape.

4. The gangway (1) between two articulately connected vehicle parts (3, 4)according to one of the preceding claims,
**characterized in that**
the leaf spring segments (21, 22) are substantially equal in length.

5. The gangway (1) between two articulately connected vehicle parts (3, 4) according to one of the preceding claims,
**characterized in that**
the hinge joint device (30) comprises at least one hinge joint (32, 33).

6. The gangway (1) between two articulately connected vehicle parts (3, 4) according to one of the preceding claims,
**characterized in that**
the hinge joint device (30) receives a line support (27a - 27g).

7. The gangway (1) between two articulately connected vehicle parts (3, 4) according to one of the preceding claims,
**characterized in that**
the hinge joint device (30) comprises at least two hinge joints (32, 33) arranged at a distance from each other.

8. The gangway (1) between two articulately connected vehicle parts (3, 4) according to claim 7,
**characterized in that**
the hinge joints (32, 33) are connected to one another by a coupling link (34).

9. The gangway (1) between two articulately connected vehicle parts (3, 4) according to claim 8,
**characterized in that**
the line support is connected with the coupling link (34) at the zenith of the spring assembly (20).

10. The gangway (1) between two articulately connected vehicle parts (3, 4) according to one of the preceding claims,
**characterized in that**
the leaf spring segments (21, 22) comprise at least one pre-tensioning member for holding the leaf spring segments (21, 22) in an arcuate, outwardly bulging position.

11. The gangway (1) between two articulately connected vehicle parts (3, 4) according to claim 10,
**characterized in that**
the pre-tensioning element is designed as a leaf spring bridge (40) which bridges the region of the hinge joint device (30).

12. The gangway (1) between two articulately connected vehicle parts (3, 4) according to claim 11,
**characterized in that**
the leaf spring bridge (40) is arranged on the inside of the hinge joint device (30).

13. The gangway (1) between two articulately connected vehicle parts (3, 4) according to one of the preceding claims,
**characterized in that**
the guide device comprises a guide cross-beam (9) extending transversely to the longitudinal axis of the guide in the roof area, wherein the guide cross-beam (9) receives a slide (10) running along the guide cross-member (9), wherein the slide (10) is connected with the spring assembly (20) in the region of the hinge joint device (30).

14. The gangway (1) between two articulately connected vehicle parts (3, 4) according to claim 13,
**characterized in that**
the gangway comprises a bellows (6) with a center frame (8), wherein the guide cross-beam (9) is part of the center frame (8).

## Revendications

1. Passerelle d'intercirculation (1) entre deux parties de véhicule (3, 4) reliées l'une à l'autre de manière articulée, un ensemble de guidage pour des conduites d'alimentation s'étendant dans la région du toit étant prévu dans la région du toit des parties de véhicule (3, 4), l'ensemble de guidage comprenant un ensemble ressort (20) pour guider les conduites d'alimentation, des supports de conduites (27a - 27g) étant disposés sur l'ensemble ressort (20),
**caractérisé en ce que**
l'ensemble ressort (20) comprend au moins deux segments de ressort à lame (21, 22) qui sont respectivement fixés avec l'une de leurs extrémités à la face frontale de la partie de véhicule correspondante (3, 4), les segments de ressort à lame (21, 22) étant reliés entre eux avec leurs autres extrémités libres par au moins un dispositif de charnière articulée (30) ayant un axe de pivotement vertical, les segments de ressort à lame (21, 22) étant sensiblement de même longueur, ce qui a pour conséquence que le dispositif de charnière articulée (30) est positionné au zénith de l'ensemble ressort (20).

2. Passerelle d'intercirculation (1) entre deux parties de véhicule (3, 4) reliées l'une à l'autre de manière articulée selon la revendication 1,
**caractérisée en ce que**
les segments de ressort à lame (21, 22) ont un tracé en forme d'arc.

3. Passerelle d'intercirculation (1) entre deux parties de véhicule (3, 4) reliées l'une à l'autre de manière articulée selon la revendication 2,
**caractérisée en ce que**
les segments de ressort à lame (21, 22) sont courbés vers l'extérieur en forme d'arc.

4. Passerelle d'intercirculation (1) entre deux parties de véhicule (3, 4) reliées l'une à l'autre de manière articulée selon l'une des revendications précédentes,
**caractérisée en ce que**
les segments de ressort à lame (21, 22) sont de longueur sensiblement égale.

5. Passerelle d'intercirculation (1) entre deux parties de véhicule (3, 4) reliées l'une à l'autre de manière articulée selon l'une des revendications précédentes,
**caractérisée en ce que**
le dispositif de charnière articulée (30) comprend au moins une charnière articulée (32, 33).

6. Passerelle d'intercirculation (1) entre deux parties de véhicule (3, 4) reliées l'une à l'autre de manière articulée selon l'une des revendications précédentes,
**caractérisée en ce que**
le dispositif de charnière articulée (30) reçoit un support de conduites (27a - 27g).

7. Passerelle d'intercirculation (1) entre deux parties de véhicule (3, 4) reliées l'une à l'autre de manière articulée selon l'une des revendications précédentes,
**caractérisée en ce que**
le dispositif de charnière articulée (30) comprend au moins deux charnières articulées (32, 33) disposées à distance l'une de l'autre.

8. Passerelle d'intercirculation (1) entre deux parties de véhicule (3, 4) reliées l'une à l'autre de manière articulée selon la revendication 7,
**caractérisée en ce que**
les charnières articulées (32, 33) sont reliées entre elles par un élément de liaison (34).

9. Passerelle d'intercirculation (1) entre deux parties articulées de véhicule (3, 4) selon la revendication 8,
**caractérisé en ce que**
le support de conduite est relié à l'élément de liaison (34) au zénith de l'ensemble ressort (20).

10. Passerelle d'intercirculation (1) entre deux parties de véhicule (3, 4) reliées l'une à l'autre de manière articulée selon l'une des revendications précédentes,
**caractérisée en ce que**
les segments de ressort à lame (21, 22) comportent au moins un élément de précontrainte pour maintenir les segments de ressort à lame (21, 22) dans une position courbée vers l'extérieur en forme d'arc.

11. Passerelle d'intercirculation (1) entre deux parties de véhicule (3, 4) reliées l'une à l'autre de manière articulée selon la revendication 10,
**caractérisée en ce que**
l'élément de précontrainte prend la forme d'un pont de ressort à lames (40) qui enjambe la région du dispositif de charnière articulée (30).

12. Passerelle d'intercirculation (1) entre deux parties de véhicule (3, 4) reliées l'une à l'autre de manière articulée selon la revendication 11,
**caractérisée en ce que**
le pont de ressort à lame (40) est disposé sur le côté intérieur du dispositif de charnière articulée (30).

13. Passerelle d'intercirculation (1) entre deux parties de véhicule (3, 4) reliées l'une à l'autre de manière articulée selon l'une des revendications précédentes,
**caractérisée en ce que**
l'ensemble de guidage comprend une traverse de guidage (9) s'étendant dans la région du toit transversalement à l'axe de guidage longitudinal, la traverse de guidage (9) recevant un chariot (10) passant le long de la traverse de guidage (9), le chariot (10) étant relié à l'ensemble ressort (20) dans la région du dispositif de charnière articulée (30).

14. Passerelle d'intercirculation (1) entre deux parties articulées de véhicule (3, 4) selon la revendication 13,
**caractérisé en ce que**
la passerelle d'intercirculation comprend un soufflet (6) avec un cadre central (8), la traverse de guidage (9) faisant partie du cadre central (8).
